# EUROPEAN PATENT SPECIFICATION

(11) **EP 3 089 540 B1**
(45) Date of publication and mention of the grant of the patent: **17.10.2018**
(21) Application number: 16167398.3
(22) Date of filing: 28.04.2016
(51) Int. Cl.: H04W 72/12, H04W 28/02, H04W 72/04, H04W 28/08, H04W 72/14

(54) **DEVICE AND METHOD OF REPORTING A BUFFER STATUS REPORT**
VORRICHTUNG UND VERFAHREN ZUM MELDEN EINES PUFFERSTATUSBERICHTS
DISPOSITIF ET PROCÉDÉ PERMETTANT DE RAPPORTER UN RAPPORT D'ÉTAT DE TAMPON

(30) Priority: 28.04.2015 US 201562154090 P
(43) Date of publication of application: 02.11.2016
(73) Proprietor: HTC Corporation, Taoyuan City 330 (TW)
(72) Inventor: WU, Chih-Hsiang, 330 Taoyuan City (TW)
(74) Representative: Murgitroyd & Company

(56) References cited:
- EP-A1- 2 723 144
- EP-A1- 2 737 766
- WO-A1-2014/183664
- WO-A1-2016/105568
- WO-A2-2015/002466
- INTERDIGITAL COMMUNICATIONS: "Bearer Architecture for WLAN Integration for LTE R13", 3GPP DRAFT; R2-151560 (REL-13 LTE+WLAN - BEARER SPLITTING), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Bratislava, Slovakia; 20150420 - 20150424 10 April 2015 (2015-04-10), XP050953140, Retrieved from the Internet: URL:http://www.3gpp.org/ftp/tsg_ran/WG2_RL 2/TSGR2_89bis/Docs/ [retrieved on 2015-04-10]
- ERICSSON: "LTE-WLAN aggregation", 3GPP DRAFT; R2-151438, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Bratislava, Slovakia; 20150420 - 20150424 19 April 2015 (2015-04-19), XP050936366, Retrieved from the Internet: URL:http://www.3gpp.org/ftp/Meetings_3GPP_ SYNC/RAN2/Docs/ [retrieved on 2015-04-19]

## Description

### Background of the Invention

### 1. Field of the Invention

The present invention relates to a base station and a method used in a wireless communication system, and more particularly, to a base station and method of reporting a buffer status report in a wireless communication system.

### 2. Description of the Prior Art

Long-term evolution (LTE)/Wireless Local Area Network (WLAN) aggregation can be used for increasing data rate. A user equipment (UE) provides a buffer status report (BSR) indicating an amount of buffered data available for transmission to the eNB, such that the eNB can schedule UL grant(s) (e.g., for allocation of LTE resource(s)) to the UE according to the amount of buffered data available for transmission.
EP 2 723 144 A1; Interdigital Communications: "Bearer architecture for WLAN integration for LTE R13", 3GPP Draft: R2-151560 (Rel-13 LTE+WLAN - Bearer splitting), Bratislava 10-20 April 2015; Ericsson: "LTE-WLAN Aggregation", 3GPP Draft: R2-151438, Bratislava 20-24 April 2015 and WO 2016/105568 A1 may be regarded as background art useful for understanding the invention.

### Summary of the Invention

It is an object of the present invention to provide a method and related base station for reporting a buffer status report to solve the abovementioned problem. This object can be achieved by the features as defined in the independent claims.

A base station (BS) for scheduling a communication device comprises a storage unit for storing instructions and a processing means coupled to the storage unit. The processing means is configured to execute the instructions stored in the storage unit. The instructions comprise configuring a first radio bearer (RB) utilizing wireless local area network (WLAN) resources for data transmission to the communication device; configuring a second RB utilizing long-term evolution (LTE) resources for the data transmission to the communication device; configuring the first RB not belonging to any of logical channel groups, LCG; configuring the communication device not to report a buffer size, indicating a sum of an amount of buffered data of the first RB and an amount of buffered data of the second RB, in a buffer status report, BSR.

A method for scheduling uplink, UL, resources for transmission between a communication device and a base station, comprising: configuring a first radio bearer, RB, utilizing wireless local area network, WLAN, resources for data transmission to the communication device; configuring a second RB utilizing long-term evolution, LTE, resources for the data transmission to the communication device; and configuring the communication device not to report a buffer size, indicating a sum of an amount of buffered data of the first RB and an amount of buffered data of the second RB, in a buffer status report, BSR, and wherein the first RB does not belong to any of logical channel groups, LCG.

### Brief Description of the Drawings

The accompanying drawings illustrate presently exemplary embodiments of the disclosure and serve to explain, by way of example, the principles of the disclosure.
Fig. 1 is a schematic diagram of a wireless communication system according to an example of the present invention.
Fig. 2 is a schematic diagram of a communication device according to an example of the present invention.
Fig. 3 is a flowchart of a process according to an example of the present invention.
Fig. 4 is a flowchart of a process according to an example of the present invention.
Fig. 5 is a flowchart of a process according to an example of the present invention.
Fig. 6 is a flowchart of a process according to an example of the present invention.
Fig. 7 is a flowchart of a process according to an example of the present invention.

### Detailed Description

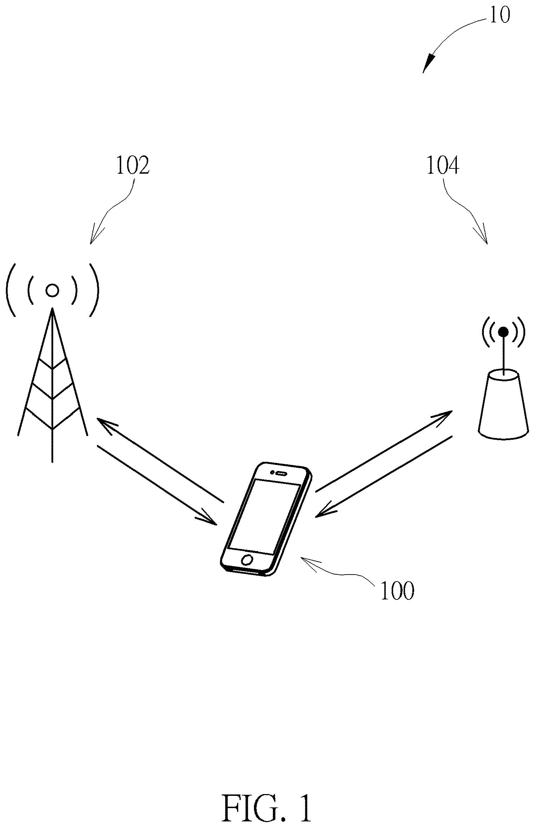

Fig. 1 is a schematic diagram of a wireless communication system 10 according to an example of the present invention. The wireless communication system 10 is briefly composed of a communication device 100, a base station (BS) 102 and an access point (AP) 104. In Fig. 1, the communication device 100, the BS 102 and AP 104 are simply utilized for illustrating the structure of the wireless communication system 10. In one example, the BS 102 may be an evolved Node-B (eNB) in an evolved universal terrestrial radio access network (UTRAN) (E-UTRAN) of a long term evolution (LTE) system, or a fifth generation (5G) BS employing orthogonal frequency-division multiplexing (OFDM) and/or non-OFDM for communicating with the communication device 100 in a wider bandwidth (e.g., greater than 20MHz) or a shorter time interval (e.g., less than 1 ms) of transmission. The AP 104 may be a network entity in a wireless local area network (WLAN). The communication device 100 and the AP 104 may support IEEE 802.11 related standards (e.g., IEEE 802.11a/b/g/n/ac/ad).

In Fig. 1, the communication device 100 may be configured to communicate with the BS 102 and AP 104 at the same time according to LTE/WLAN aggregation or 5G/WLAN aggregation configured to the communication device 100. That is, the communication device 100 may perform a transmission/reception via both the BS 102 and the AP 104. In addition, the communication device 100 may communicate with the BS 102 via one or more radio bearer(s) utilizing the LTE or 5G resource(s), and the communication device 100 may communicate with the AP 104 via one or more radio bearer(s) utilizing the WLAN resource(s).

The communication device 100 may be an user equipment (UE), a mobile phone, a laptop, a tablet computer, an electronic book, a portable computer system, a vehicle or an aircraft. In addition, for an uplink (UL), the communication device 100 is a transmitter and the BS 102 and AP 104 are receivers, and for a downlink (DL), the BS 102 and AP 104 are transmitters and the communication device 100 is a receiver.

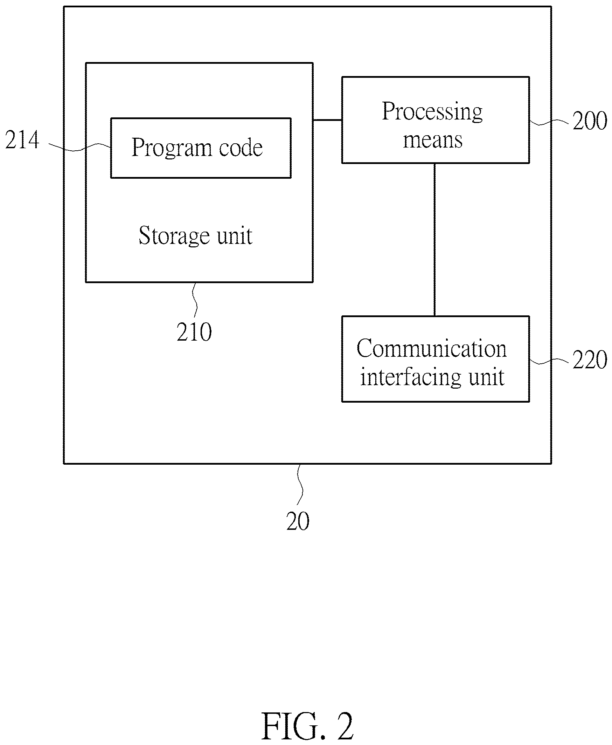

Fig. 2 is a schematic diagram of a communication device 20 according to an example of the present invention. The communication device 20 may be the communication device 100, the BS 102 or the AP 104 shown in Fig. 1, but is not limited herein. The communication device 20 may include a processing means 200 such as a microprocessor or Application Specific Integrated Circuit (ASIC), a storage unit 210 and a communication interfacing unit 220. The storage unit 210 may be any data storage device that may store a program code 214, accessed and executed by the processing means 200. Examples of the storage unit 210 include but are not limited to a read-only memory (ROM), flash memory, random-access memory (RAM), hard disk, optical data storage device, non-volatile storage unit, non-transitory computer-readable medium (e.g., tangible media), etc. The communication interfacing unit 220 is preferably a transceiver and is used to transmit and receive signals (e.g., data, messages and/or packets) according to processing results of the processing means 200.

In the following embodiments, a UE is used to represent the communication device 100 in Fig. 1 and a BS is used to represent the BS 102 in Fig. 1 to simplify the illustration of the embodiments.

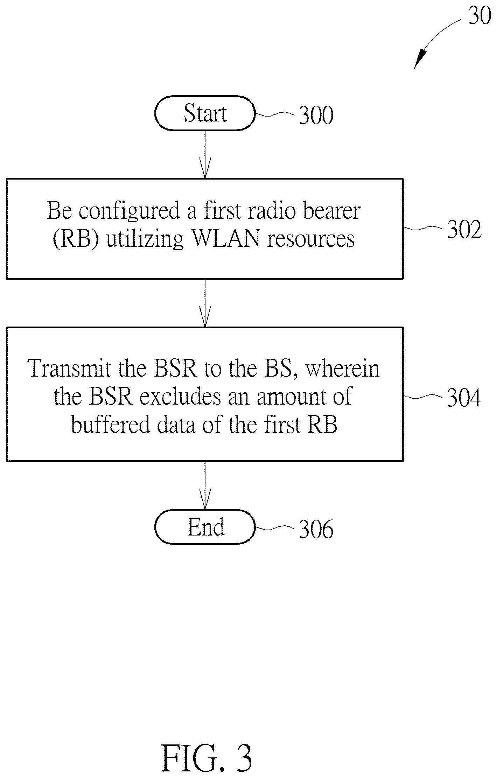

Fig. 3 is a flowchart of a process 30 according to an example of the present invention. The process 30 may be utilized in a UE, to report a buffer status report (BSR) to a BS. The process 30 includes the following steps:
Step 300: Start.
Step 302: Be configured a first radio bearer (RB) utilizing WLAN resources.
Step 304: Transmit the BSR to the BS, wherein the BSR excludes an amount of buffered data of the first RB.
Step 306: End.

According to the process 30, the UE may be configured a first RB utilizing WLAN resources. Then, the UE may transmit the BSR to the BS, wherein the BSR may exclude an amount of buffered data of the first RB. That is, the UE may not transmit the amount of the buffered data of the first RB to the BS. Accordingly, the BS may not waste resource(s) of the LTE by overscheduling UL grant(s) to accommodate the amount of the buffered data to the UE, because the UE excludes the amount of the buffered data of the first RB from the BSR. Thus, the problem of overscheduling is solved. As a result, not only resource(s) of the LTE can be used effectively, but also the benefit of the LTE/WLAN aggregation can be maintained.

Realization of the process 30 is not limited to the above description.

The following example is used for illustrating the process 30. The UE may have a radio resource control (RRC) connection with the BS. That is, the UE may have a signaling RB (SRB) with the BS, and may be in the RRC connected mode. Then, the BS may transmit a RRC message configuring a first RB utilizing only WLAN resources to the UE. In addition, the UE determines to transmit a BSR to the BS due to a triggering condition is satisfied. The UE excludes an amount of buffered data of the first RB, if the UE has data of the first RB in the buffer. The triggering condition may be availability for data transmission of the first RB or a second RB, an expiry of a periodic BSR timer (e.g., periodicBSR-Timer), an expiry of a retransmission BSR timer (e.g., retxBSR-Timer) or a padding BSR. The BS may configure the SRB and/or the second RB utilizing only the LTE or both the LTE and the WLAN. The BSR may include an amount of buffered data of the SRB and an amount of buffered data of the second RB.

The UE may not determine to transmit the BSR to the BS, when the data of the first RB becomes available for transmission rather than the data of the SRB or the second RB becomes available for transmission. In other words, the BSR may not be triggered by the data of the first RB which becomes available for transmission, and the BSR may only be triggered by the data of the SRB or the second RB which becomes available for transmission. Furthermore, the BS may configure the UE to exclude the amount of the buffered data of the first RB from the BSR by using the RRC message. That is, the UE may not transmit a buffer size indicating a sum of the amount of the buffered data of the first RB and an amount of buffered data of the second RB and/or SRB. The BS may transmit UL grants accommodating transmission of amount of data excluding the amount of the buffered data of the first RB to the UE, if the BS configures the UE to include the amount of the buffered data of the first RB. For example, the BS may receive the BSR indicating that there are about 100 bytes buffered data of the first RB, and there are about 200 bytes buffered data of the second RB. The BS may schedule the UL grant(s) accommodating about 200 bytes buffered data of the second RB to the UE, but may not schedule the UL grant(s) accommodating about 100 bytes buffered data of the first RB to the UE.

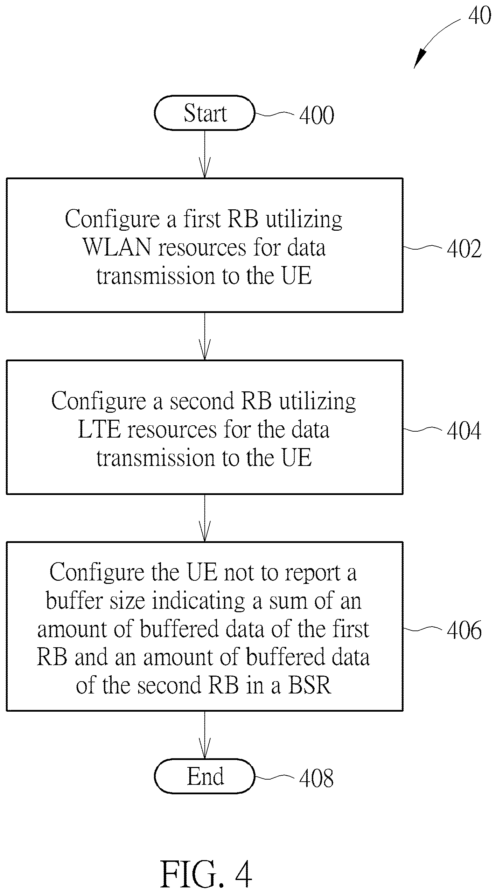

Fig. 4 is a flowchart of a process 40 according to an example of the present invention. The process 40 may be utilized in a BS scheduling a UE. The process 40 includes the following steps:
Step 400: Start.
Step 402: Configure a first RB utilizing WLAN resources for data transmission to the UE.
Step 404: Configure a second RB utilizing LTE resources for the data transmission to the UE.
Step 406: Configure the UE not to report a buffer size indicating a sum of an amount of buffered data of the first RB and an amount of buffered data of the second RB in a BSR.
Step 408: End.

According to the process 40, the BS configures a first RB utilizing WLAN resources for data transmission and a second RB utilizing LTE resources for the data transmission to the UE. Then, the BS configures the UE not to report a buffer size, indicating a sum of an amount of buffered data of the first RB and an amount of buffered data of the second RB, in a buffer status report BSR. That is, the UE transmits the BSR not including the buffer size indicating the sum of the amount of the buffered data of the first RB and the amount of the buffered data of the second RB to the BS. The BSR may include a first buffer size indicating the amount of the buffered data of the first RB and/or a second buffer size indicating the amount of the buffered data of the second RB. Accordingly, the BS may not transmit UL grant(s) accommodating the sum of the amount of the buffered data of the first RB and the amount of the buffered data of the second RB to the UE. The BS may transmit UL grant(s) accommodating the amount of the buffered data of the second RB according to the second buffer size but does not transmit UL grant(s) accommodating the amount of the buffered data of the first RB.

Realization of the process 40 is not limited to the above description. The following examples are used for illustrating the process 40.

In one example, the UE may have a RRC connection with the BS. That is, the UE may have a SRB with the BS and may be in the RRC connected mode. Then, the BS may transmit a first RRC message configuring a first RB utilizing only WLAN resources to the UE, and may transmit a second RRC message configuring a second RB utilizing LTE resources to the UE. In addition, the BS may configure the UE not to report a buffer size indicating a sum of an amount of buffered data of the first RB and an amount of buffered data of the second RB by using the first RRC message. Thus, the UE may transmit a BSR not including the buffer size indicating the sum of the amount of the buffered data of the first RB and the amount of the buffered data of the second RB to the BS.

In one example, the BS may configure that the first RB belongs to a first logical channel group (LCG) to the UE, and may configure that the second RB belongs to a second LCG to the UE, wherein the first and the second LCGs are different LCGs. In other words, the first LCG may include RB(s) utilizing only WLAN resources for data transmission, and the second LCG may not include RB(s) utilizing only the WLAN resources for the data transmission. Thus, the UE may transmit the BSR not including the buffer size indicating the sum of the amount of the buffered data of the first RB and the amount of the buffered data of the second RB to the BS. The BSR may include the first buffer size of the first LCG and the second buffer size of the second LCG. For example, the first buffer size may indicate 100 bytes buffered data of the first LCG and the second buffer size may indicate 200 bytes buffered data of the second LCG.

Further, the UE may transmit the BSR when the amount of the buffered data of the first RB (or an index of the amount of the buffered data of the first RB) is larger than (i.e., above) a threshold. The BS may configure the threshold. For example, the UE may transmit the BSR when the UE detects the amount of the buffered data of the first RB is larger than 150 bytes or the index of the amount of the buffered data of the first RB is larger than an index 19. In another example, the BS may configure the UE to transmit a BSR, if the amount of the buffered data of the RB(s) (or an index of the amount of the buffered data of the RB(s)) belonging to the first LCG is larger than (i.e., above) a threshold. All the RB(s) belonging to the first LCG may utilize the WLAN resources.

Furthermore, the BS may configure the UE not to transmit a scheduling request (SR) (i.e., SR prohibition) for a transmission of a BSR triggered by data transmission of the first RB available for transmission. That is, the UE is not allowed to transmit the SR for the transmission of the BSR.

In one example, the BS may configure that the first RB does not belong to any one of LCGs to the UE. Thus, the UE does not include the buffer size indicating the sum of the amount of the buffered data of the first RB and the amount of the buffered data of the second RB in any BSR transmitted to the BS. In addition, the UE may not trigger any BSR reporting when the buffered data of the first RB becomes available for transmission.

In general, the BS should not configure a RB utilizing only the WLAN resources and another RB utilizing the LTE resources to be in the same LCG.

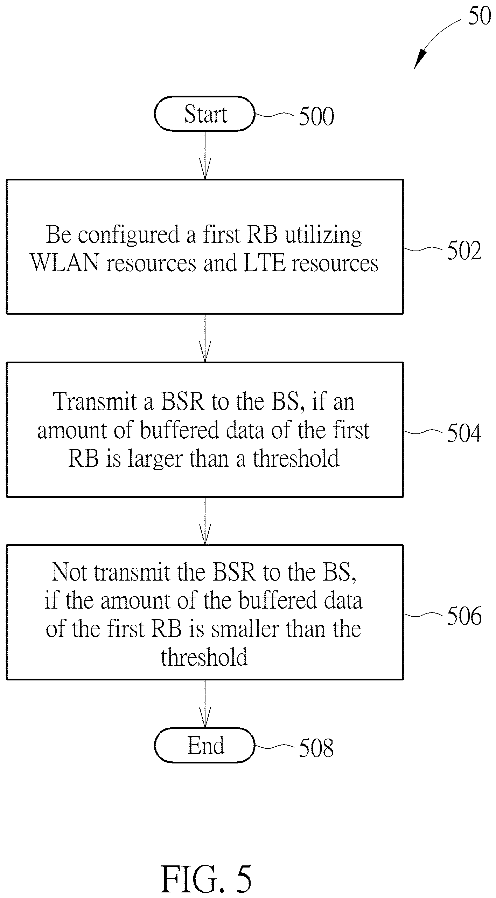

Fig. 5 is a flowchart of a process 50 according to an example of the present invention. The process 50 may be utilized in a UE, to trigger a BSR to a BS. The process 50 includes the following steps:
Step 500: Start.
Step 502: Be configured a first RB utilizing WLAN resources and LTE resources.
Step 504: Transmit a BSR to the BS, if an amount of buffered data of the first RB is larger than a threshold.
Step 506: Not transmit the BSR to the BS, if the amount of the buffered data of the first RB is smaller than the threshold.
Step 508: End.

According to the process 50, the UE is configured a first RB utilizing WLAN resources and LTE resources. Then, the UE transmits (e.g., trigger) a BSR to the BS, if an amount of buffered data of the first RB is larger than a threshold, but the UE does not transmit (e.g., trigger) the BSR to the BS, if the amount of the buffered data of the first RB is smaller than the threshold.

Realization of the process 50 is not limited to the above description. The following examples are used for illustrating the process 50.

In one example, the UE has a RRC connection with the BS. That is, the UE has a SRB with the BS, and is in the RRC connected mode. Then, the BS transmits at least one RRC message configuring a first RB utilizing both the WLAN resources and LTE resources to the UE. The UE determines to transmit the BSR to the BS, if the UE has data of the first RB available in the buffer, and the amount of the buffered data of the first RB is larger than a threshold. The BSR may include a buffer size considering the amount of the buffered data of the first RB, or include a buffer size only considering the difference between the amount of the buffered data of the first RB and the threshold (i.e., the amount of the buffered data of the first RB - the threshold). Thus, the BS may transmit UL grant(s) accommodating the less amount of the buffered data of the first RB to the UE.

In one example, the threshold is configured by a RRC message transmitted by the BS. In another example, the UE may or may not transmit the BSR to the BS, if the amount of the buffered data of the first RB is equal to the threshold.

In one example, the UE has the amount of the buffered data of the first RB is 1000 bytes, which is larger than the threshold configured with 500 bytes. Thus, the UE transmits the BSR including an index indicating 1000 bytes or 500 bytes to the BS. In one example, the BSR includes an index indicating 1300 bytes or 800 bytes, if a second RB or the SRB has 300 bytes buffered data available for the transmission and the second RB and the first RB belong to a same LCG. The second RB or the SRB utilizes only the LTE resources. In another example, the UE has the amount of the buffered data of the first RB is 400 bytes, which is smaller than the threshold configured with 500 bytes. Thus, the UE does not transmit the BSR to the BS.

In one example, the UE triggers transmission of the BSR, if 300 bytes data of the SRB becomes available, and the UE has 700 bytes data of the first DRB in the buffer. The UE may generate the BSR including a first index indicating the 300 bytes and a second index indicating the 700 bytes or 200 bytes, because the amount of the buffered data of first RB (i.e., 700 bytes) is larger than the threshold (i.e., 500 bytes) or an index of 700 bytes (e.g. 28) is larger than the threshold (e.g., 26). Because the UE may transmit part of the amount of the buffered data of the first RB (i.e., 700 byte) (e.g., 300 bytes or 500 bytes) via the WLAN, the BS may transmit the uplink grant(s) accommodating less than 700 bytes, if the BSR includes the second index indicating the amount of the buffered data of first RB (i.e., 700 byte).

In one example, the BS configures the threshold with a larger value, if the BS allows the UE to transmit more data via the WLAN resources. In one example, the BS configures the threshold with a great value (e.g., infinity) to avoid the UE triggering the BSR including the buffer status of the RB utilizing the WLAN resources.

Furthermore, the UE may trigger transmitting a BSR to the BS, when an amount of the buffered data of the RB is larger than a threshold. The UE may cancel the triggered BSR, because an amount of the buffered data of the RB becomes smaller (e.g., smaller than the threshold) due to that the UE transmits part or all of the buffered data via the WLAN resources before transmitting the BSR.

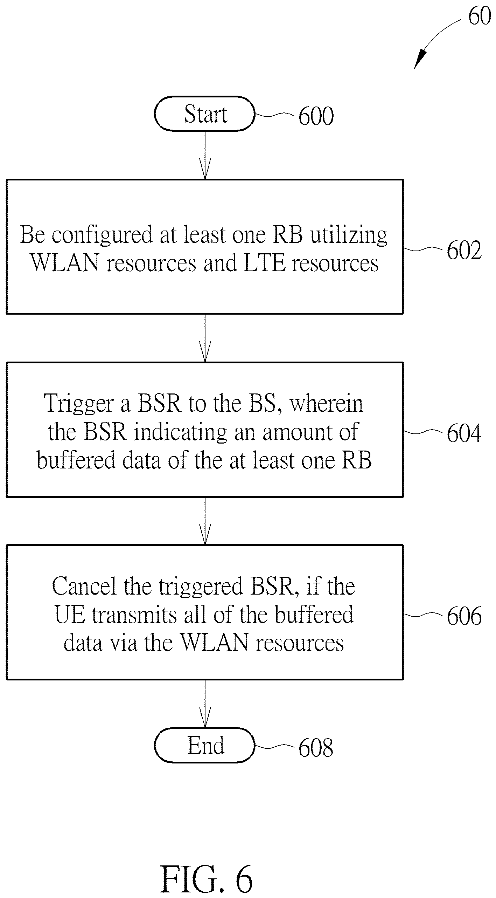

Fig. 6 is a flowchart of a process 60 according to an example of the present invention. The process 60 may be utilized in a UE, to trigger a BSR to a BS. The process 60 includes the following steps:
Step 600: Start.
Step 602: Be configured at least one RB utilizing WLAN resources and LTE resources.
Step 604: Trigger a BSR to the BS, wherein the BSR indicating an amount of buffered data of the at least one RB.
Step 606: Cancel the triggered BSR, if the UE transmits all of the buffered data via the WLAN resources.
Step 608: End.

According to the process 60, the UE may be configured at least one RB utilizing WLAN resources and LTE resources. Then, the UE may trigger a BSR to the BS, wherein the BSR indicating an amount of buffered data of the at least one RB. The UE may cancel the triggered BSR, if the UE transmits all of the buffered data via the WLAN resources. That is, although the BSR is triggered, it still can be cancelled if all of the buffered data has been transmitted by the UE via the WLAN resources.

The following example is used for illustrating to clarify the process 60. The UE may have a RRC connection with the BS. That is, the UE may have a SRB with the BS, and may be in the RRC connected mode. Then, the BS may transmit at least one RRC message configuring at least one RB utilizing both the WLAN resources and LTE resources to the UE. The UE may determine to transmit the BSR to the BS, if the UE has data of the at least one RB available in the buffer. The UE may cancel the triggered BSR, because the UE transmits all of the buffered data via the WLAN resources before transmitting the BSR, i.e., there is no buffered data to be reported.

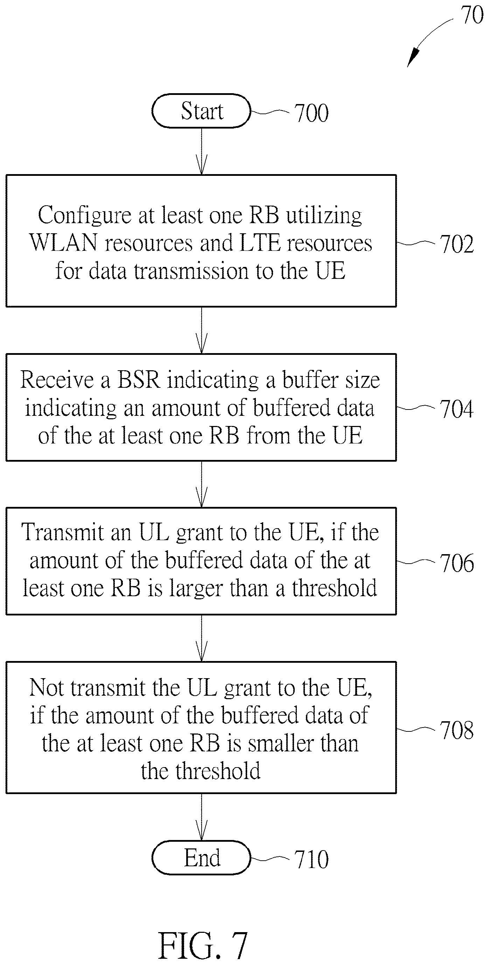

Fig. 7 is a flowchart of a process 70 according to an example of the present invention. The process 70 may be utilized in a BS, to schedule a UE. The process 70 includes the following steps:
Step 700: Start.
Step 702: Configure at least one RB utilizing WLAN resources and LTE resources for data transmission to the UE.
Step 704: Receive a BSR indicating a buffer size indicating an amount of buffered data of the at least one RB from the UE.
Step 706: Transmit an UL grant to the UE, if the amount of the buffered data of the at least one RB is larger than a threshold.
Step 708: Not transmit the UL grant to the UE, if the amount of the buffered data of the at least one RB is smaller than the threshold.
Step 710: End.

According to the process 70, the BS configures at least one RB utilizing WLAN resources and LTE resources for data transmission to the UE. Then, the BS receives a BSR indicating an amount of buffered data of the at least one RB from the UE. The BS transmits an UL grant to the UE, if the amount of the buffered data of the at least one RB is larger than a threshold but does not transmit the UL grant to the UE, if the amount of the buffered data of the at least one RB is smaller than the threshold. The BS configures the threshold with a larger value, if the BS allows the UE to transmit more data via the WLAN resources. Accordingly, the BS may not transmit UL grant(s) accommodating an amount of buffered data of all of the at least one RB.

It should be noted that although the above examples are illustrated to clarify the related operations of corresponding processes. The examples can be combined and/or modified arbitrarily according to system requirements and/or design considerations. In one example, the RB may be a data radio bearer (DRB), and the RRC message may be an RRCConnectionReconfiguration message. The term "resources" may represent a plurality of durations (e.g. OFDM/non-OFDM symbols, time slots, subframes or frames) and/or frequency(ies) (e.g. subcarrier(s) or carrier(s)).

Those skilled in the art should readily make combinations, modifications and/or alterations on the abovementioned description and examples. Any of the abovementioned processes may be compiled into the program code 214. The abovementioned description, steps and/or processes including suggested steps can be realized by means that could be hardware, software, firmware (known as a combination of a hardware device and computer instructions and data that reside as read-only software on the hardware device), an electronic system, or combination thereof. An example of the means may be the communication device 20.

To sum up, the present invention provides a method and related communication device for reporting a BSR to a BS. Accordingly, the BS may not waste resource(s) of the LTE by overscheduling UL transmission(s) to the communication device. Thus, the problem that resource(s) of the LTE are not used efficiently is solved.

time slots, subframes or frames) and/or frequency(ies) (e.g. subcarrier(s) or carrier(s)).

Those skilled in the art should readily make combinations, modifications and/or alterations on the abovementioned description and examples. Any of the abovementioned processes may be compiled into the program code 214. The abovementioned description, steps and/or processes including suggested steps can be realized by means that could be hardware, software, firmware (known as a combination of a hardware device and computer instructions and data that reside as read-only software on the hardware device), an electronic system, or combination thereof. An example of the means may be the communication device 20.

To sum up, the present invention provides a method and related communication device for reporting a BSR to a BS. Accordingly, the BS may not waste resource(s) of the LTE by overscheduling UL transmission(s) to the communication device. Thus, the problem that resource(s) of the LTE are not used efficiently is solved.

## Claims

1. A base station, BS, for scheduling a communication device, comprising:
a storage unit (210) for storing instructions; and
a processing means (200), coupled to the storage unit (210), wherein the storage unit (210) stores, and the processing means (200) is configured to execute,
instructions of:
configuring a first radio bearer, RB, utilizing wireless local area network, WLAN, resources for data transmission to the communication device;
configuring a second RB utilizing long-term evolution, LTE, resources for the data transmission to the communication device; and
being further **characterising by**
configuring the first RB not belonging to any of logical channel groups, LCG; and
configuring the communication device not to report a buffer size, indicating a sum of an amount of buffered data of the first RB and an amount of buffered data of the second RB, in a buffer status report, BSR.

2. A method for scheduling uplink, UL, resources for transmission between a communication device and a base station, comprising:
configuring a first radio bearer, RB (402), utilizing wireless local area network, WLAN,
resources for data transmission to the communication device;
configuring a second RB (404) utilizing long-term evolution, LTE, resources for the data transmission to the communication device; and
being further **characterising by**
configuring the first RB not belonging to any of logical channel groups, LCG; and
configuring the communication device not to report a buffer size, indicating a sum of an amount of buffered data of the first RB and an amount of buffered data of the second RB, in a buffer status report, BSR (406).

## Patentansprüche

1. Eine Basisstation (BS, Base Station) zum Programmieren eines Kommunikationsgeräts, die Folgendes beinhaltet:
eine Speichereinheit (210) zum Speichern von Anweisungen; und
ein Verarbeitungsmittel (200), das mit der Speichereinheit (210) gekoppelt ist, wobei die Speichereinheit (210) folgende Anweisungen speichert und das Verarbeitungsmittel (200) konfiguriert ist, um diese auszuführen:
Konfigurieren eines ersten Funkträgers (RB, Radio Bearer), der Ressourcen eines drahtlosen lokalen Netzwerks (WLAN) zur Datenübertragung an das Kommunikationsgerät verwendet;
Konfigurieren eines zweiten RB, der Long-Term-Evolution(LTE)-Ressourcen für die Datenübertragung an das Kommunikationsgerät verwendet; und
ferner **gekennzeichnet durch** Folgendes:
Konfigurieren des ersten RB, der keiner der logischen Kanalgruppen (LCG, Logical Channel Group) angehört; und
Konfigurieren des Kommunikationsgeräts derart, dass es keine Puffergröße, die eine Summe einer Menge gepufferter Daten des ersten RB und einer Menge gepufferter Daten des zweiten RB anzeigt, in einem Pufferstatusbericht (BSR, Buffer Status Report) meldet.

2. Ein Verfahren zum Programmieren von Uplink(UL)-Ressourcen zur Übertragung zwischen einem Kommunikationsgerät und einer Basisstation, das Folgendes beinhaltet:
Konfigurieren eines ersten Funkträgers (RB) (402), der Ressourcen eines drahtlosen lokalen Netzwerks (WLAN) für die Datenübertragung an das Kommunikationsgerät verwendet;
Konfigurieren eines zweiten RB (404), der Long-Term-Evolution(LTE)-Ressourcen für die Datenübertragung an das Kommunikationsgerät verwendet; und
ferner **gekennzeichnet durch** Folgendes:
Konfigurieren des ersten RB, der keiner der logischen Kanalgruppen (LCG) angehört; und
Konfigurieren des Kommunikationsgeräts derart, dass es keine Puffergröße die eine Summe einer Menge gepufferter Daten des ersten RB und einer Menge gepufferter Daten des zweiten RB anzeigt, in einem Pufferstatusbericht (BSR) (406) meldet.

## Revendications

1. Une station de base, BS, pour la programmation d'un dispositif de communication, comprenant :
une unité de stockage (210) pour le stockage d'instructions ; et
un moyen de traitement (200), couplé à l'unité de stockage (210), l'unité de stockage (210) stockant, et le moyen de traitement (200) étant configuré pour exécuter, des instructions de :
configuration d'un premier support radioélectrique, RB, utilisant des ressources de réseau local sans fil, WLAN, pour une transmission de données au dispositif de communication ;
configuration d'un deuxième RB utilisant des ressources d'évolution à long terme, LTE, pour la transmission de données au dispositif de communication ; et
qui est en sus **caractérisée par**
la configuration du premier RB afin qu'il n'appartienne à aucun groupe de canaux logiques, LCG ; et
la configuration du dispositif de communication afin qu'il ne rapporte pas une taille de tampon, indiquant une somme d'une quantité de données mises en tampon du premier RB et d'une quantité de données mises en tampon du deuxième RB, dans un rapport d'état de tampon, BSR.

2. Un procédé pour la programmation de ressources de liaison montante, UL, pour une transmission entre un dispositif de communication et une station de base, comprenant :
la configuration d'un premier support radioélectrique, RB (402), utilisant des ressources de réseau local sans fil, WLAN, pour une transmission de données au dispositif de communication ;
la configuration d'un deuxième RB (404) utilisant des ressources d'évolution à long terme, LTE, pour la transmission de données au dispositif de communication ; et
qui est en sus **caractérisé par**
la configuration du premier RB afin qu'il n'appartienne à aucun groupe de canaux logiques, LCG ; et
la configuration du dispositif de communication afin qu'il ne rapporte pas une taille de tampon, indiquant une somme d'une quantité de données mises en tampon du premier RB et d'une quantité de données mises en tampon du deuxième RB, dans un rapport d'état de tampon, BSR (406).
